# EUROPEAN PATENT APPLICATION

(11) **EP 1 684 257 A1**
(43) Date of publication of application: **26.07.2006**
(21) Application number: 05110799.3
(22) Date of filing: 16.11.2005
(51) Int. Cl.: G09G 3/28

(54) **Plasma display device and driving method thereof**

(30) Priority: 19.01.2005 KR 2005004803
(71) Applicant: Samsung SDI Co., Ltd., Suwon-si Gyeonggi-do (KR)
(72) Inventor: Lee, Myoung-Kyu Legal & IP Team, Yongin-City Kyeonggi-Do (KR); Ito, Kazuhiro Legal & IP Team, Yongin-City Kyeonggi-Do (KR)
(74) Representative: Hengelhaupt, Jürgen

(57) **Abstract**

A plasma display device driving method that sets the voltage (Ve2) applied to the sustain electrode in the falling period of the reset period to be higher than the voltage (Ve1) applied to the sustain electrode (X) in the address period. As a result, the address voltage applied to the address electrode (A) in the address period can be reduced.

## Description

### BACKGROUND

### Field of the Invention

The embodiments of the present invention relate to a plasma display device and a driving method thereof.

### Description of the Related Art

A plasma display device is a display device that uses a plasma display panel (PDP) for displaying characters or images by using plasma generated by a gas discharge. The PDP includes a plurality of discharge cells arranged in a matrix pattern.

A display panel of a plasma display device is driven using frames that are divided into a plurality of weighted subfields where each subfield includes a reset period, an address period, and a sustain period.

The reset period is a period for resetting the state of discharge cells so that a stable address discharge may be performed. The address period is a period for selecting which discharge cells are to be turned on and which discharge cells are not to be turned on. The sustain period is a period for applying a sustain discharge to the addressed cells that have been selected to be turned on to display images.

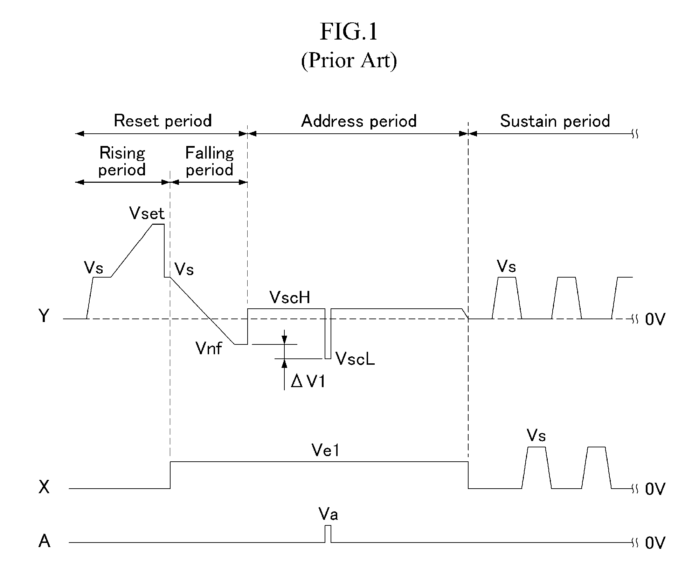

FIG. 1 shows driving waveforms for a conventional plasma display device. A scan pulse having a voltage of VscL and an address pulse having a voltage of Va are respectively applied to a scan electrode Y and an address electrode A while an X electrode is maintained at the voltage of Ve, in order to select discharge cells to be turned on during an address period. A discharge is generated between the scan electrode Y, to which the voltage of VscL is applied, and the address electrode A, to which the Va voltage is applied. A discharge is also generated between the scan electrode Y and the sustain electrode X so that positive wall charges are formed at the scan electrode Y and negative wall charges are formed at the address electrode A and the sustain electrode X. In this instance, as shown in FIG. 1, an address discharge is further assisted in being generated by setting the voltage of VscL to be less than a voltage of Vnf and increasing the voltage difference (VscL-Va) between the voltages applied to the scan electrode and the address electrode. However, the address discharge is also generated at the discharge cells that are not selected in the address period if the voltage of VscL is substantially reduced. It is then necessary to increase the voltage of Va in order to improve the generation of the address discharge because the range for reducing the voltage of VscL is limited. As a result, the tape carrier package (TCP) generates additional heat and the necessary withstanding voltage of switches increases with the Va voltage because the voltage of Va is increased.

### SUMMARY

The embodiments of the present invention provide a plasma display device driving method with the feature of reducing the address voltage in the address period.

The embodiments of the present invention also provide a plasma display device having the features of reducing the cost of the plasma display device and driving scan electrodes and sustain electrodes on a single driving board.

Embodiments include an exemplary method for driving a plasma display device using a plurality of subfields divided from a frame where the plasma display device has a plurality of first electrodes, a plurality of second electrodes, and discharge cells that are formed by the first and second electrodes. During a reset period of a subfield, a voltage at the second electrode is gradually decreased from a second voltage to a third voltage while the first electrode is maintained at a first voltage. In an address period, a fifth voltage is applied to the second electrode so as to select a discharge cell to be turned on while the first electrode is maintained at a fourth voltage that is less than the first voltage. In a sustain period, the selected discharge cell is sustain-discharged.
Preferably an absolute value of the third voltage is smaller than an absolute value of the fifth voltage. Preferably, during the sustain period, a sustain discharge pulse alternates between a high level and a low level and the sustain discharge pulse is applied to the first electrode and the second electrode. Preferably, during the sustain period, a sustain discharge pulse alternates between a positive voltage and a negative voltage and the sustain discharge pulse is applied to the second electrode. Preferably the sustain discharge is applied exclusively to the second electrode.

In a further embodiment, a plasma display device comprises a plasma display panel (PDP), a controller, and a driver. The plasma display panel includes a plurality of first electrodes and a plurality of second electrodes. A plurality of discharge cells are formed by the first electrodes and the second electrodes on the PDP. The controller divides a frame into a plurality of subfields each having a reset period, an address period, and a sustain period, and drives the subfields. The driver gradually decreases a voltage at the second electrode from a second voltage to a third voltage while maintaining the voltage at the first electrode at a first voltage during the reset period and applies a fifth voltage to the second electrode of a discharge cell to be turned on while maintaining the voltage at the first electrode at a fourth voltage that is lower than the first voltage in the address period.
Preferably an absolute value of the third voltage is smaller than an absolute value of the fifth voltage. Preferably the driver applies a sustain discharge pulse alternately having a positive voltage and a negative voltage to the second electrode while maintaining the voltage at the first electrode at a ground voltage during the sustain period. Preferably the driver is formed on a single printed circuit board. Preferably the driver includes a scan electrode driver and a sustain electrode driver.
In yet another embodiment of the invention, a plasma display device comprises a plasma display panel having a plurality of discharge cells; a scan electrode driver coupled to the plasma display panel, the scan electrode driver to generate a reset waveform to reset a discharge cell in the plurality of discharge cells, during a reset period; and a sustain electrode driver coupled to the plasma display panel, the sustain electrode driver to generate a driving waveform that has a first voltage during the reset waveform and a second voltage during an address period, the first voltage having an absolute value less than an absolute value of the second voltage.
Preferably the plasma display device further comprises an address electrode driver coupled to the plasma display panel, the address electrode driver to generate a driving waveform to select the discharge cell, the address electrode driver applying a third voltage to select the discharge cell, during the address period. Preferably the scan electrode driver generates a first sustain discharge waveform, and wherein the sustain electrode driver generates a second sustain discharge waveform. Preferably the scan electrode driver generates a sustain discharge waveform that alternates between positive and negative voltages. Preferably the scan electrode driver exclusively generates the sustain discharge waveform. Preferably the plasma display device further comprises a controller coupled to the scan electrode driver and sustain electrode driver, the controller to receive a video signal having a plurality of frames and to divide each frame into a plurality of weighted subfields. Preferably the first voltage is applied during a falling period of a reset period. Preferably the scan electrode driver and sustain electrode driver are on a single printed circuit board. Preferably the absolute value of the third voltage is dependent on a difference between a fourth voltage set by the scan electrode driver during the reset period and a fifth voltage set by the scan electrode during the address period. Preferably the absolute value of the second voltage is less than an absolute value of a sustain-discharge voltage.

### BRIEF DESCRIPTION OF THE DRAWINGS

FIG. 1 shows driving waveforms of a conventional plasma display device driving waveforms.

FIG. 2 shows a plasma display device according to an exemplary embodiment of the present invention.

FIG. 3 shows driving waveforms for a first embodiment of a plasma display device.

FIG. 4 shows driving waveforms for a second embodiment of a plasma display device.

FIG. 5 shows one embodiment of a plasma display device.

### DETAILED DESCRIPTION

Wall charges in the embodiments of the present invention represent charges formed and accumulated on a wall (e.g., a dielectric layer) close to an electrode of a discharge cell. Although the wall charges do not actually touch the electrodes, the wall charge will be described as being "formed" or "accumulated" on the electrode. A wall voltage indicates a potential difference formed on the wall because of wall charges.

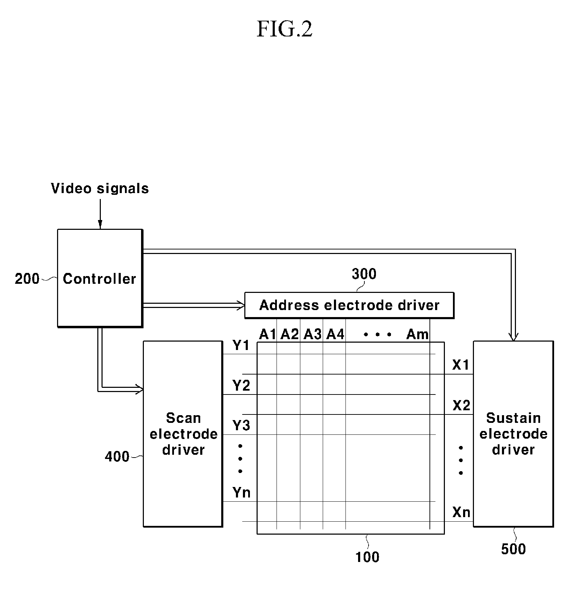

FIG. 2 shows a plasma display device according to an exemplary embodiment of the present invention. As shown in FIG. 2, the plasma display device includes a PDP 100, a controller 200, an address electrode driver 300, a scan electrode driver 400, and a sustain electrode driver 500.

The PDP 100 includes a plurality of address electrodes A1 to Am arranged in the column direction, and a plurality of sustain electrodes X1 to Xn and a plurality of Y electrodes Y1 to Yn arranged in pairs in the row direction. The sustain electrodes X1 to Xn are formed to correspond to the scan electrodes Y1 to Yn, and one of each of their terminals are coupled in common. The PDP 100 includes a substrate (not shown) on which sustain and scan electrodes X1 to Xn and Y1 to Yn are arranged, and a substrate (not shown) on which address electrodes A1 to Am are arranged. The two substrates are arranged to face each other with a discharge space between them so that the scan electrodes Y1 to Yn may cross the address electrodes A1 to Am and the sustain electrode X1 to Xn may cross the address electrodes A1 to Am. In this instance, discharge spaces at the points where the address electrodes A1 to Am cross the sustain and scan electrodes X1 to Xn and Y1 to Yn form discharge cells. The configuration of the PDP 100 shows one embodiment, and other embodiments may include other types of panels to which subsequent driving waveforms are applied.

The controller 200 receives an external video signal and outputs an address driving control signal, a sustain electrode driving control signal, and a scan electrode driving control signal. The controller 200 divides a field into a plurality of subfields, such that each subfield defines a reset period, an address period, and a sustain period with respect to time.

The address electrode driver 300 receives the address electrode driving control signal from the controller 200, and applies a display data signal for selecting a discharge cell to be displayed to the address electrodes.

The scan electrode driver 400 receives the scan electrode driving control signal from the controller 200 and applies a driving voltage to the scan electrodes.

The sustain electrode driver 500 receives the sustain electrode driving control signal from the controller 200 and applies a driving voltage to the sustain electrodes.

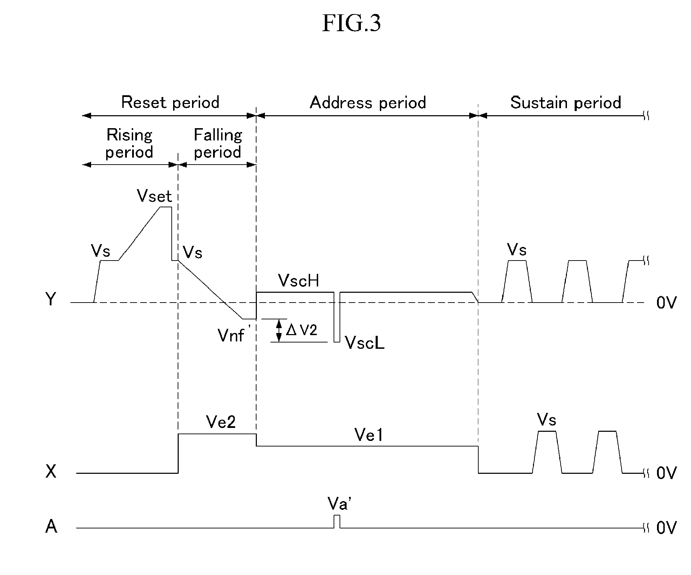

FIG. 3 is a diagram of driving waveforms for the plasma display device according to the first exemplary embodiment of the present invention. During the rising period of the reset period, the voltage at the Y electrode (e.g., the scan electrode) is gradually increased from the voltage of Vs to the voltage of Vset while the X electrode (e.g., the sustain electrode) is maintained at 0V. The voltage at the Y electrode in FIG. 3 is illustrated to be increased in a ramp pattern. While the voltage at the Y electrode is increased, a weak discharge is respectively generated between the Y electrode and the X electrode and between the Y electrode and the A electrode, (e.g. the address electrode). Negative wall charges are formed at the Y electrode and positive wall charges are formed at the X and A electrodes. When the voltage at the Y electrode is gradually varied as shown in FIG. 3, a weak discharge occurs in the cell and wall charges are formed so that a sum of the external voltage and the wall voltage of the cell may maintain the firing voltage. The voltage of Vset is set to be high enough to generate discharges in the cells since the cells are to be reset in the reset period.

In the falling period of the reset period, the voltage at the Y electrode is gradually decreased from the voltage of Vs to the voltage of Vnf' while the X electrode is maintained at the voltage of Ve2. In this example, the voltage of Ve2 is greater than the voltage of Ve1 in the driving waveform of FIG. 1. While the voltage at the Y electrode is decreased, a weak discharge is respectively generated between the Y electrode and the X electrode and between the Y electrode and the A electrode. The negative wall charges formed at the Y electrode and the positive wall charges formed at the X and A electrodes are erased to thus reset the discharge cells. In this example, the voltage of Va' applied to the A electrode may be reduced during the address period by increasing the voltage of Ve2 applied to the X electrode during the falling period of the reset period. In general, the voltage of (Vnf'-Ve2) is set to approximate the firing voltage between the Y electrode and the X electrode. The wall voltage between the Y electrode and the X electrode then becomes almost 0V, and the cells that are not address-discharged in the address period are prevented from being misfired during the sustain period.

During the address period, while the X electrode is maintained at the voltage of Ve1, a scan pulse with the voltage of VscL and an address pulse with the voltage of Va' are respectively applied to the Y electrode and the A electrode so as to select discharge cells to be turned on. The Y electrode that is not selected is biased with the voltage of VscH, which is higher than the voltage of VscL, and a reference voltage is applied to the A electrode of the cell that is not to be turned on. An address discharge occurs in the discharge cell formed by the A electrode to which the voltage of Va' is applied and the Y electrode to which the voltage of VscL is applied. Positive wall charges are formed at the Y electrode and the negative wall charges are formed at the X electrode. Also, negative wall charges are formed at the A electrode.

The voltage of Va' may be applied to the A electrode during the address period because the voltage of Ve2, which is higher than the voltage of Ve1, is applied to the X electrode during the falling period of the reset period in the first exemplary embodiment of the present invention. A sum of the wall voltage between the A electrode and the Y electrode and the external voltage of Vnf between the A electrode and the Y electrode is determined as a firing voltage of Vfay between the A electrode and the Y electrode when the voltage of Vnf is applied in the reset period. If 0V is applied to the A electrode and the voltage of VscL (=Vnf) is applied to the Y electrode during the address period, then a discharge may occur because the voltage of Vfay is provided between the A electrode and the Y electrode, but in general, no discharge occurs because the discharge delay time in this case is longer than the width of the scan pulse and the address pulse. However, when the voltage of Va is applied to the A electrode and the voltage of VscL (=Vnf') is applied to the Y electrode, a voltage that is higher than the voltage of Vfay is formed between the A electrode and the Y electrode. The discharge delay time is reduced to be less than the width of the scan pulse and discharge may occur. In this case, where the voltage of VscL is set to be a voltage lower than the voltage of Vnf, the voltage difference of (VscL-Va') between the Y electrode and the A electrode is increased and the address discharge is properly generated. Also, the voltage of Va is reduced by as much as the voltage difference of (VscL-Vnf, ΔV2). Therefore, in the address period, the voltage of VscL is set to be equal to or lower than the voltage of Vnf and the voltage of Va' is set to be higher than the reference voltage.

In this example embodiment, when the driving waveform of FIG. 1 is compared to the first exemplary embodiment of the present invention, the absolute value of the voltage of Vnf can be reduced to be less than the absolute value of the voltage of Vnf of FIG. 1 if the voltage of Ve2 that is applied to the X electrode is increased during the reset period. If the absolute value of the voltage of Vnf' is small and has the relationship to the voltage of VscL described above, then voltage difference of ΔV2 is increased to be greater than the voltage difference of ΔV1 of FIG. 1. Therefore, the voltage of Va' is decreased by as much as ΔV2-ΔV1, if compared to FIG. 1.

During the sustain period, sustain discharge pulses alternate between a high level voltage (the voltage of Vs in FIG. 3) and a low level voltage (0V in FIG. 3) and are applied to the Y electrode and the X electrode. For example, 0V may be applied to the X electrode when the voltage of Vs is applied to the Y electrode, and 0V may be applied to the Y electrode when the voltage of Vs is applied to the X electrode. A discharge occurs at the Y electrode and the X electrode because of the wall voltage formed between the Y electrode and the X electrode by an address discharge in the address period and the voltage of Vs.

The process for applying a sustain discharge pulse to the Y electrode and the X electrode is repeated a number of times corresponding to the weight associated with the corresponding subfield.

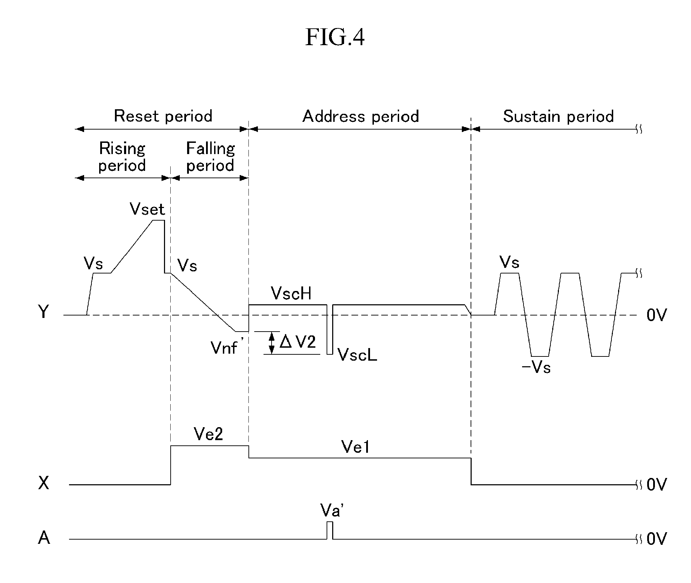

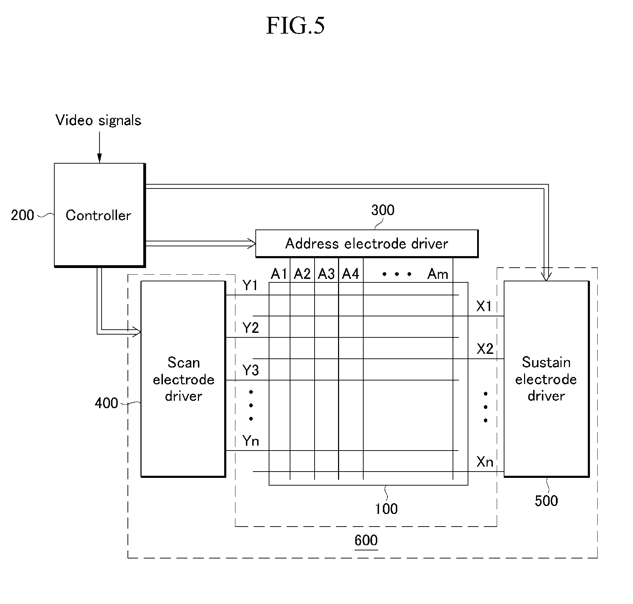

During the sustain period, a sustain discharge pulse is alternately applied to the Y electrode and the X electrode. Therefore, the scan electrode driver 400 for driving the Y electrodes and the sustain electrode driver 500 for driving the X electrodes may be separately provided. When the driving boards are separately provided, there is a problem of mounting the driving boards on a chassis base of the display device. Manufacturing costs are increased because of the two driving boards. One method for solving this problem is combining the two driving boards into a single board that is attached to an end part of each of the Y electrodes and an end part of each the X electrodes, which may be extended to reach the single board. FIG. 5 illustrates one embodiment of the plasma display device where the scan electrode driver 400 and sustain electrode driver 500 are present on the same circuit board 600. However, the combination of the driving boards increases impedance in the extended X electrodes. Accordingly, the sustain discharge pulses of the sustain period may be distorted and the sustain discharge would not stabilize. A method for reducing the impedance at the X electrodes is described with reference to FIG. 4.

FIG. 4 shows the plasma display device driving waveforms according to a second exemplary embodiment of the present invention. During the sustain period, the reference voltage (e.g., 0V in FIG. 4) is applied to the X electrode and a sustain discharge pulse alternates between voltages of Vs and -Vs applied to the Y electrode.

Because a wall voltage of Vwxy is formed so that the potential of the Y electrode may be higher than that of the X electrode in the discharge cell in which the address discharge is generated during the address period, a pulse with the voltage of Vs is applied to the Y electrode to generate a sustain discharge between the Y electrode and the X electrode while the A electrode and the X electrode are maintained at the reference voltage during the sustain period. In this embodiment, the voltage of Vs is set to be lower than the firing voltage of Vfxy between the Y electrode and the X electrode and the voltage of (Vs+Vwxy) is set to be higher than the voltage of Vfxy. The negative wall charges are formed at the Y electrode, the positive wall charges are formed at the X electrode and the A electrode by the sustain discharge, and the wall voltage of Vfyx is formed so that the potential of the X electrode may be higher than that of the Y electrode.

A pulse having the voltage of -Vs is applied to the Y electrode so that a sustain discharge occurs between the Y electrode and the X electrode. As a result, the positive wall charges are formed at the Y electrode and the negative charges are formed at the X electrode and the A electrode so that a sustain discharge may occur until the voltage of Vs is applied to the Y electrode. A sustain discharge pulse alternates the voltage of Vs and -Vs applied to the Y electrode by a number of times corresponding to the weight of the corresponding subfield.

As a result, the sustain discharge pulse is applied to the Y electrode, and hence, the impedance on the path through which the sustain discharge pulse is applied becomes constant. Also, in the driving waveform of FIG. 4, if the voltage is applied by the scan electrode driver 400 to the Y electrode and the X electrode and the voltage is applied by the address electrode driver 300 to the A electrode, the sustain electrode driver 500 can be eliminated to save on circuit manufacturing costs. The reset operation, the address operation, and the sustain discharge operation are substantially performed by the driving waveform applied to the Y electrode to thereby realize a combined driving board.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A method for driving a plasma display device through frames divided into a plurality of subfields, the plasma display device having a first electrode, a second electrode, and discharge cell formed by the first electrode and the second electrode, the method comprising:
gradually decreasing a voltage at the second electrode from a second voltage to a third voltage while maintaining the first electrode at a first voltage, during a reset period;
applying a fifth voltage to the second electrode so as to select a discharge cell to be turned on while maintaining the first electrode at a fourth voltage that is lower than the first voltage, during an address period; and
sustain-discharging the selected discharge cell, during a sustain period.

2. The method of claim 1, wherein an absolute value of the third voltage is smaller than an absolute value of the fifth voltage.

3. The method of claim 2, wherein during the sustain period, a sustain discharge pulse alternates between a high level and a low level and the sustain discharge pulse is applied to the first electrode and the second electrode.

4. The method of claim 2, wherein during the sustain period, a sustain discharge pulse alternates between a positive voltage and a negative voltage and the sustain discharge pulse is applied to the second electrode.

5. The method of claim 4, wherein the sustain discharge is applied exclusively to the second electrode.

6. A plasma display device comprising:
a plasma display panel including a first electrode and a second electrode and a discharge cell formed on the plasma display panel by the first electrode and the second electrode;
a controller for dividing a frame into a plurality of subfields each having a reset period, an address period, and a sustain period, the controller for driving the subfields; and
a driver for gradually decreasing a voltage at the second electrode from a second voltage to a third voltage while maintaining a voltage at the first electrode at a first voltage during the reset period, and applying a fifth voltage to the second electrode of a discharge cell to be turned on while maintaining the voltage at the first electrode at a fourth voltage that is lower than the first voltage, during the address period.

7. The plasma display device of claim 6, wherein an absolute value of the third voltage is smaller than an absolute value of the fifth voltage.

8. The plasma display device of claim 6, wherein the driver applies a sustain discharge pulse alternately having a positive voltage and a negative voltage to the second electrode while maintaining the voltage at the first electrode at a ground voltage during the sustain period.

9. The plasma display device of claim 6, wherein the driver is formed on a single printed circuit board.

10. The plasma display device of claim 9, wherein the driver includes a scan electrode driver and a sustain electrode driver.
